# EUROPEAN PATENT SPECIFICATION

(11) **EP 0 303 449 B1**
(45) Date of publication and mention of the grant of the patent: **12.05.1999**
(21) Application number: 88307361.1
(22) Date of filing: 09.08.1988
(51) Int. Cl.: C08L 67/02

(54) **Polyester resin composition**
Polyesterharz-Zusammensetzung
Composition de résine de polyester

(30) Priority: 14.08.1987 JP 202967/87
(43) Date of publication of application: 15.02.1989
(73) Proprietor: POLYPLASTICS CO. LTD., Higashi-ku Osaka-shi Osaka (JP)
(72) Inventor: Okada, Tsuneyoshi, Kawasaki Kanagawa (JP)
(74) Representative: Jackson, Peter

(56) References cited:
- EP-A- 0 030 417
- EP-A- 0 041 327
- EP-A- 0 078 937
- DE-A- 2 440 174
- GB-A- 2 078 240

## Description

This invention relates to a polyester resin composition for injection molding composed mainly of ethylene terephthalate improved in moldability.

### [Prior Art]

Polyalkylene terephthalate resins for injection molding including a polyethylene terephthalate resin are widely used in the fields of electronic equipment electric machines, etc. because of their excellent thermal stability and chemical resistance. However, they have a low crystallization rate. Therefore, they disadvantageously take a long period of time to complete one cycle of the molding and tend to cause burrs. Further, they have drawbacks that molded articles after molding are not only unstable in color tone but also poor in dimensional stability. For this reason, an attempt has been made to eliminate these drawbacks by addition of a nucleating agent. However, the effect was yet unsatisfactory.

### ( Summary of the Invention )

In view of the above-described circumstances, the present inventors have made extensive and intensive studies with a view to solving the above-described problems. As a result, the present inventors have found that a polyester resin composition having excellent properties and in which the above described drawbacks are at least alleviated, can be prepared by blending polyalkylene terephthalate resins with a melt-processable polyester capable of forming a particular amount of an anisotropic melt phase, which has led to the completion of the present invention.

Specifically, in accordance with the present invention, there is provided a polyester resin composition which comprises a polyalkylene terephthalate resin which is a mixture of more than 50% by weight of a polyethylene terephthalate resin with less than 50% by weight of a polybutylene terephthalate resin, and 3 to 20% by weight, based on the weight of said mixture, of a melt-processable polyester capable of forming the anisotropic phase in the molten state, wherein said melt-processable polyester is an aromatic polyester or an aromatic polyester-amide comprising at least one compound selected from the group consisting of
a) aromatic hydroxycarboxylic acids; and
b) aromatic hydroxyamines and aromatic diamines.

In the present invention, the polyalkylene terephthalate resin composed mainly of ethylene terephthalate is a polyester prepared by polycondensation of ethylene glycol with terephthalic acid or an ester thereof with a lower alcohol according to a customary method and also includes a copolymer prepared by copolymerizing the polyester with a third component copolymerisable therewith. Examples of the third component include isophthalic acid, methylisophthalic acid, methylterephthalic acid, diphenyldicarboxylic acid, naphthalenedicarboxylic acid, diphenyldicarboxylic acid, aliphatic glycols such as trimethylene glycol, tetramethylene glycol, propylene glycol, and neopentyl glycol, etc. They are used alone or in the form of a mixture of two or more of them. A typical example of the polyalkylene terephthalate resin is a polyethylene terephthalate resin. This resin displays the above drawbacks to a remarkably high degree. A mixture of at least 50% by weight of a polyethylene terephthalate resin with less than 50% by weight of polybutylene terephthalate, has similar drawbacks and is to be improved by the present invention.

In the present invention, the melt-processable polyester capable of forming an anisotropic melt phase (hereinafter abbreviated to the "liquid crystal polyester") is a melt-processable polyester and has properties such that the molecular chains are regularly arranged parallel to each other in a molten state. The state in which molecules are arranged in this way is often called a liquid crystal state or a nematic phase of a liquid crystal material. Such polymer molecules are generally comprised of polymers which are slender and flat and have considerably high rigidity along the major axis of the molecules and a plurality of chain-extending bonds which are usually in either a coaxial relationship or a parallel relationship with each other.

The properties of the anisotropic melt phase may be examined by a customary polarimetric method using crossed polarizers. More particularly, the anisotropic melt phase can be examined by observing a molten sample placed on a Leitz hot stage in a nitrogen atmosphere at a magnification of 40 under a Leitz polarization microscope. The above-mentioned polymer is optically anisotropic. Namely, when it is placed between crossed polarizers, it permits transmission of a light beam. If the sample is optically anisotropic, the polarized light will be transmitted, even when it is in a static state.

The components of the polymer which forms the anisotropic melt phase as described above are those selected from the group consisting of:
① at least one member selected from the group consisting of aromatic dicarboxylic acids and alicyclic dicarboxylic acids;
② at least one member selected from the group consisting of aromatic diols, alicyclic diols, and aliphatic diols;
③ at least one member selected from the group consisting of aromatic hydroxy carboxylic acids;
④ at least one member selected from the group consisting of aromatic thiolcarboxylic acids;
⑤ at least one member selected from the group consisting of aromatic dithiols and aromatic thiol phenols; and
⑥ at least one member selected from the group consisting of aromatic hydroxy amines and aromatic diamines.

The polymer which forms the anisotropic melt phase is a polyester capable of forming an anisotropic melt phase and comprised of a combination of components such as:
I) a polyester comprised of the components ① and ②;
II) a polyester comprised of only the component ③ ;
III) a polyester comprised of the components ①, ②, and ③;
IV) a polythiol-ester comprised of only the component ④;
V) a polythiol-ether comprised of the components ① and ⑤;
VI) a polythiol-ether comprised of the components ①, ④, and ⑤;
VII) a polyester-amide comprised of the components ①, ③, and ⑥; and
VIII) a polyester-amide comprised of the components ①, ②, ③, and ⑥.

Further, polyester carbonates are also polymers which form an anisotropic melt phase, although they are not included in the category of the above-mentioned combinations of components. They are comprised essentially of 4-oxybenzoyl units, dioxyphenyl units, dioxycarbonyl units, and terephthaloyl units.

The above-described polyesters I), II), and III) and polyester-amide VIII) which are polymers capable of forming an anisotropic melt phase suitable for use in the present invention may be produced by various esterification processes in which organic monomer compounds having functional groups capable of forming required repetitive units through condensation are mutually reacted. Examples of the functional groups of these organic monomer compounds include carboxyl, hydroxyl, ester, acyloxy, acyl halide and amino groups. The organic monomer compounds can be reacted by a melt acidolysis method in the absence of any heat exchange fluid. According to this method, the monomers are first heated together to form a melt of reactants. As the reaction proceeds, solid polymer particles are suspended in the melt. Vacuum may be applied in order to facilitate the removal of volatile matter (e.g., acetic acid or water) which is produded as a by-product in the final stage of the condensation.

Further, a slurry condensation method may also be adopted in forming a liquid crystal aromatic polyester suitable for use in the present invention. In this method, the solid product is obtained in suspension in a heat exchange medium.

In both the above-described melt acidolysis process and slurry polymerization process, the organic monomer reactants from which the liquid crystal polyester is derived may be used in the reaction in a modified form in which the hydroxyl groups of such monomers have been esterified (i.e., in the form of a lower acyl ester). The lower acyl group preferably has 2 to 4 carbon atoms. It is preferred to use acetates of the organic monomer reactants in the reaction.

Representative examples of the catalyst which can be used at will in both the melt acidolysis and slurry process include dialkyltin oxides (e.g., dibutyltin oxide), diaryltin oxides, titanium dioxide, antimony trioxide, alkoxytitanium silicate, titanium alkoxide, alkali and alkaline earth metal salts of carboxylic acids (e.g., zinc acetate), Lewis acids (e.g., BF₃), and gaseous catalysts such as hydrogen halides (e.g., HCℓ). The amount of the catalyst is generally about 0.001 to 1% by weight, preferably about 0.01 to 0.2% by weight, based on the total weight of the monomers.

The liquid crystal polymers suitable for use in the present invention tend to be substantially insoluble in usual solvents, which renders them unsuitable for use in solution processing. However, as mentioned above, these polymers may be readily processed by ordinary melt processing. Especially preferably liquid crystal polymers are those soluble in pentafluorophenol to some extent.

The liquid crystal polyesters suitable for use in the present invention have a weight-average molecular weight of about 2,000 to 200,000, preferably about 10,000 to 50,000, and particularly preferably about 20,000 to 25,000. On the other hand, the wholly aromatic polyester-amide suitable for the present invention have a molecular weight of about 5,000 to 50,000, preferably about 10,000 to 30,000, e.g., 15,000 to 17,000. The molecular weight may be determined by gel permeation chromatography and other standard determination methods which do not involve the formation of a solution of polymers, e.g., by determining the terminal groups by infrared spectroscopy in the form of a compression-molded film. Alternatively, the molecular weight may be determined by a light scattering method in the form of a pentafluorophenol solution.

The above-described liquid crystal polyesters and polyester-amides exhibit an inherent viscosity (I.V.) of at least about 2.0 dℓ/g, e.g., about 2.0 to 10.0 dℓ/g, as determined at 60°C in the form of a solution prepared by dissolving the polymer in pentafluorophenol to have a polymer concentration of 0.1% by weight.

Polyesters which form an anisotropic melt phase suitable for use in the present invention are aromatic polyesters and aromatic polyester-amides and may also include polyesters which partially contain aromatic polyester units and aromatic polyester-amide units in the same molecular chain.

Examples of the compounds constituting the above-mentioned liquid crystal polymers include naphthalene compounds such as 2,6-naphthalenedicarboxylic acid, 2,6-dihydroxynaphthalene, 1,4-dihydroxynaphthalene, and 6-hydroxy-2-naphthoic acid, biphenyl compounds such as 4,4'-biphenyldicarboxylic acid and 4,4'-dihydroxybiphenyl, compounds represented by the following general formulae (I), (II), or (III): 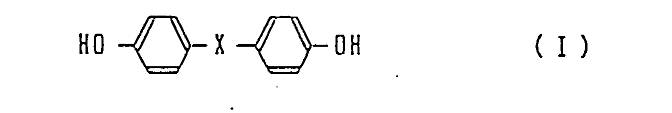 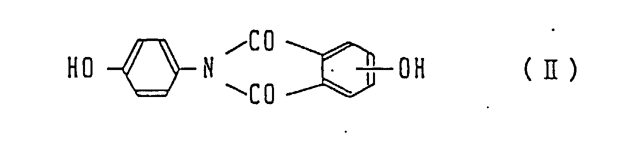 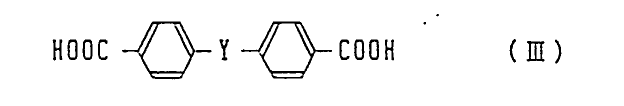 wherein X is a group selected from among an alkylene group (having 1 to 4 carbon atoms), an alkylidene group, -O-, -SO-, -SO₂-, -S-, and -CO-; and Y is a group selected from among -(CH₂)ₙ- (wherein n is 1 to 4) and -O(CH₂)ₙO- (wherein n is 1 to 4); para-substituted benzene compounds such as p-hydroxybenzoic acid, terephthalic acid, hydroquinone, p-aminophenol, and p-phenylenediamine and nucleus-substituted compounds thereof (wherein the substituent is selected from among chlorine, bromine, methyl, phenyl, and 1-phenylethyl); and meta-substituted benzene compounds such as isophthalic acid and resorcinol.

Further, the liquid crystal polyester which is used in the present invention may be a polyester partially containing a polyalkylene terephthalate portion which does not exhibit any anisotropic melt phase in the same molecular chain besides the above-described components. In this case, the alkyl group has 2 to 4 carbon atoms.

Among the polymers comprised of the above-described components, polymers containing at least one member selected from among naphthalene compounds, biphenyl compounds, and para-substituted benzene compounds as essential component are more preferable. Particularly preferable para-substituted benzene compounds include p-hydrobenzoic acid, methylhydroquinone, 1-phenylethylhydroquinone.

Polyesters capable of forming an anisotropic melt phase which are particularly preferably used in the present invention are those containing at least about 10 mol% of repetitive units containing a naphthalene portion, such as 6-hydroxy-2-naphthoyl, 2,6-dihydroxynaphthalene, and 2,6-dicarboxynaphthalene. Preferable polyester-amides are those containing repetitive units containing the above-mentioned naphthalene portion and a portion comprised of 4-aminiphenol or 1,4-phenylenediamine.

Specific examples of the compounds which are components in the above-mentioned polymers I) to VIII) and specific examples of polyesters capable of forming an anisotropic melt phase and suitable for use in the present invention are described in Japanese Patent Laid-Open No. 69866/1986.

### Brief Description of the Drawings

Fig. 1 is a graph showing the change in the molding cycle and the weld strength (determined as described below) with the change in the blending ratio of the liquid crystal polyester in the composition of the present invention (wherein a solid line represents the relationship between the amount of blending of the liquid crystal polyester and the molding cycle and a dotted line the relationship between the amount of blending of the liquid crystal polyester and the weld strength);
Fig. 2 is a perspective view of a molded article of the composition of the present invention used in the tests; and
Fig. 3 is a plan view of said molded article.

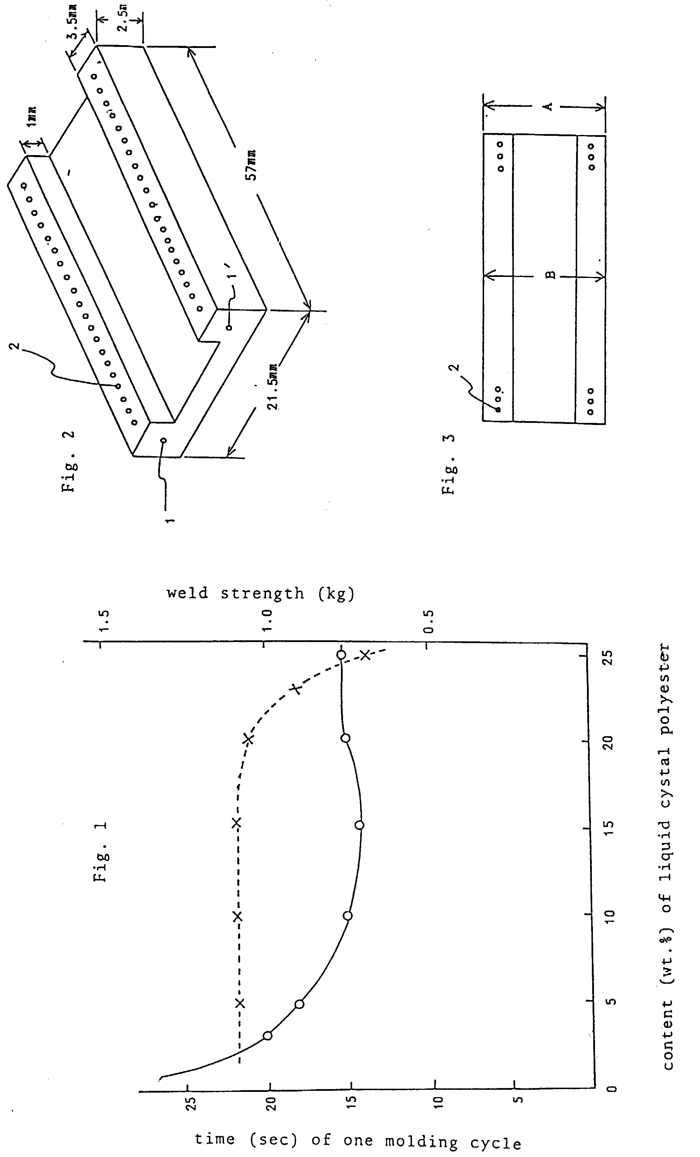

In the figures, reference numerals 1, 1' indicate a tunnel gate through which the article has been molded and reference numeral 2 points to one of a series of pin holes in the molded article. Not all of the pin holes 2 are illustrated in Figure 3.

In the present invention, the polymer component is composed mainly of a blend of 80 to 97% by weight of a polyalkylene terephthalate resin composed mainly of ethylene terephthalate with 3 to 20% by weight of a liquid crystal polyester. Some description will now be given with respect to this blending ratio based on experience.

Fig. 1 is a graph showing the relationship between the blending ratio and the molding cycle and the weld strength of a molded article with respect to the injection molding of a composition comprising a polymer component composed mainly of polyethylene terephthalate and a liquid crystal polyester used in Comp. Example 1 which will be described later.

As can be seen from Fig. 1, in a polyester resin composition containing a glass fiber blended therewith, the time taken for one molding cycle rapidly decreases with an increase in the blending ratio of the liquid crystal polyester, remarkably decreases when the liquid crystal polyester content is 3% by weight or more, is shorter than that of the conventional composition containing a nucleating agent when the content is about 5% by weight, and is kept at a constant and low time level when the content is 8% by weight or more. On the other hand, the weld strength of the molded article exhibits the opposite tendency. Specifically, the weld strength does not substantially change and is kept at a high level when the amount of blending of the liquid crystal polyester is low but begins to decrease when the amount exceeds 20% by weight.

A significant effect is attained in the present invention by blending 3 to 20% by weight of the liquid crystal polyester with the polyalkylene terephthalate resin. As is also apparent from the working examples which will be described later, the amount of blending of the liquid crystal polyester is particularly preferably 8 to 20% by weight when the maximum allowable pressure on the occurrence of burr and the dimensional stability of the molded article are also taken into consideration.

In the present invention, a combined use of the nucleating agent which has been used in the prior art has no adverse effect on the composition of the present invention.

Further, the composition of the present invention may contain other thermoplastic resins as an auxiliary additive in such an amount as will not spoil the purpose of the present invention.

The thermoplastic resins used in this case are not particularly limited. Examples of the thermoplastic resins include polyolefins such as polyethylene and polypropylene, polyacetal (homopolymer or copolymer), polystyrene, polyvinyl chloride, and polyacrylate and their copolymers, polyamide, polycarbonate, ABS, polyoxyphenylene oxide, polyoxyphenylene sulfide, and fluorocarbon resin. These thermoplastic resins may be used in the form of a mixture of two or more of them.

Further, the composition of the present invention may be blended with various inorganic and organic fillers according to the purposes. It is preferred that the filler be blended in order to prepare a molded article having excellent mechanical properties, thermal resistance, dimensional stability (resistance to deformation and warping), electrical properties, etc. The inorganic and organic fillers are used in the form of a fiber, a particle, and a sheet depending upon the purposes.

Examples of the fibrous filler include fibrous inorganic materials such as a glass fiber, a carbon fiber, as asbestos fiber, a silica fiber, a silica-alumina fiber, an alumina fiber, a zirconia fiber, a boron nitride fiber, a plasticized silicon fiber, a boron fiber, a potassium titanate fiber, and fibers of metals such as stainless steel, aluminum, titanium, copper, and brass. A typical fibrous filler is a glass fiber. Further, thermal-resistant organic fibers having high strength, such as an organic polyester fiber, a crystalline polymer fiber, an aromatic polyamide fiber, a polyimide fiber, and a fluororesin fiber, may also be used.

Examples of the particulate filler include carbon black, graphite, silica, a quartz powder, a glass bead, a milled glass fiber, a glass balloon, a glass powder, silicates such as calcium silicate, aluminum silicate, kaolin, talc, clay, diatomaceous earth, and wollastonite, metallic oxides such as iron oxide, titanium oxide, zinc oxide, antimony trioxide, and alumina, carbonates such as calcium carbonate and magnesium carbonate, sulfates of metals such as calcium sulfate and barium sulfate, and other inorganic fillers such as ferrite, silicon carbide, silicon nitride, boron nitride, and various metallic powders.

Examples of the sheet filler include mica, glass flake, and various metallic foils.

These inorganic and organic fillers may be used alone in any combination of two or more of them. The combined use of the fibrous filler and the particulate or sheet filler is preferable particularly to obtain a molded article having a combination of mechanical strengths with dimensional stability and electrical properties.

These fillers are blended in an amount of 1 to 70% by weight based on the total weight of the composition. When the amount is less than 1% by weight, no effect of addition is attained. On the other hand, when the amount exceeds 70% by weight, the moldability is lowered. It is particularly preferred that the glass fiber be blended in an amount of 10 to 50% by weight.

When these fillers are used, it is preferred to use, if necessary, binders and surface treatments.

Further, known substances which are added to ordinary thermoplastic or thermosetting resins, i.e., plasticizers, stabilizers such as antioxidants and ultraviolet absorbers, antistatic agents, surface treatments, surfactants, flame retardants, colorants such as dyes and pigments, lubricants and lubricating agents for improving flowability and releasability, may also be used according to the intended characteristics.

As is apparent from the above description and Examples and Comparative Examples which will be described later, compared to the conventional polyethylene terephthalate resin for injection molding, the composition of the present invention enables the reduction in the time taken for one molding cycle by about 40%, a two-fold improvement in the maximum allowable pressure on the occurrence of burrs, and a reduction to about 1/5 in the dimensional stability of the molded articles and has superior stability in the tone and improved strength.

The present invention will now be described in more detail with reference to the following Examples which should not be construed as limiting the scope of the present invention.

In the following Examples and Comparative Examples, various tests were conducted by the following methods.

The following tests were conducted with respect to the molding of an IC socket as shown in the perspective view of Fig. 2 through a tunnel gate 1,1' at a cylinder temperature of 285°C and at a mold temperature of 120°C using an injection molding machine (Neomat 115-45, Sycap M; a product of Sumitomo Heavy Industries, Ltd.).

### Molding cycle:

Injection molding was conducted with varied molding cycle to measure the minimum molding time taken for releasing the molded article from the mold without causing deformation of the molded article.

### Maximum allowable pressure on occurrence of burr:

Injection pressure was increased to measure the maximum pressure under which the molding can be conducted without causing the so-called burrs on the molded article.

### Dimensional stability of molded article:

Fig. 3 is a plan view of the molded article shown in Fig. 2. The difference in dimension between A and B as shown in Fig. 3 is measured with respect to a molded article which has been molded under optimum molding conditions.

In the drawing, letter A designates the width of the end portion of the molded article and letter B the width of the central portion of the molded article.

### Weld strength:

A tapered pin is pressed into a pin hole 2 of the IC socket shown in Figs. 2 and 3 to measure the stress when cracks occurred.

### Comp. Examples 1 to 6

10% by weight of each of liquid crystal polyesters A, B, C, D, E, and F (of the compositions defined below) was added to 70% by weight of a polyethylene terephthalate resin and 20% by weight of a glass fiber. They were kneaded with each other while heating in an injection molding machine kept at 230 to 250°C to prepare a substantially homogenous mixture, followed by formation of pellets for injection molding. The pellets were applied to the above-described various tests. The results are shown in Table 1.

### Comp. Examples 7 to 10

The same tests as those of Example 1 were conducted except that liquid crystal polyester A was blended in a varied amount.

The results are also shown in Table 1.

### Comp. Example 11

10% by weight of liquid crystal polyester A was added to 66.6% by weight of a polyethylene terephthalate resin, 20% by weight of a glass fiber, 0.4% by weight of sodium carbonate as a nucleating agent, and 3% by weight of neopentyl glycol dibenzoate. They were kneaded with each other while being heated in an injection molding machine kept at 230 to 250°C to prepare a substantially homogenous mixture, followed by formation of pellets for injection molding. The pellets were applied to the above-described various tests. The results are also shown in Table 1.

### Example 1

The same tests as those of Example 1 were conducted except that a mixture of a polyethylene terephthalate resin with a polybutylene terephthalate resin in a mixing ratio of 60 : 40 (weight ratio) was used instead of the polyethylene terephthalate resin. The results are also shown in Table 1.

### Example 2

The same tests as those of Example 11 were conducted except that a mixture of a polyethylene terephthalate resin with a polybutylene terephthalate resin in a mixing ratio of 60 : 40 (weight ratio) was used instead of the polyethylene terephthalate resin. The results are also shown in Table 1.

### Comparative Example 12

The same tests as those of Example 1 were conducted except that the polyethylene terephthalate was used alone without use of the liquid crystal polyester. The results are also shown in Table 1.

### Comparative Example 13

The same tests as those of Example 11 were conducted except that the polyethylene terephthalate was used alone without use of the liquid crystal polyester. The results are also shown in Table 1.

The liquid crystal polyesters used in the above Examples were respectively comprised of the following structural units:

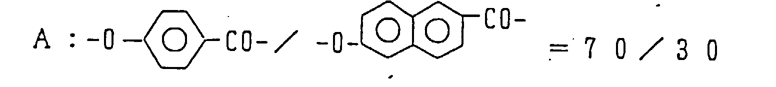

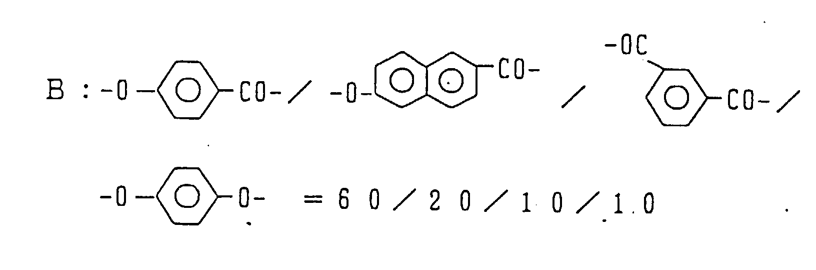

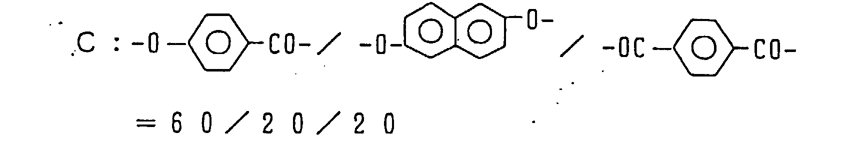

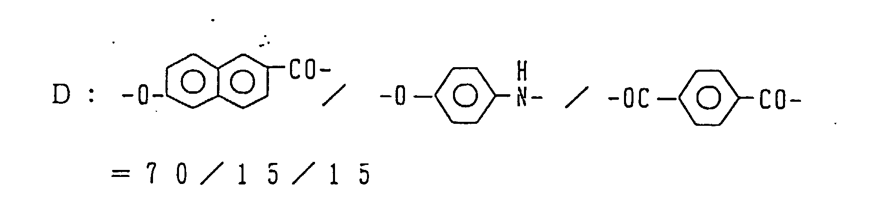

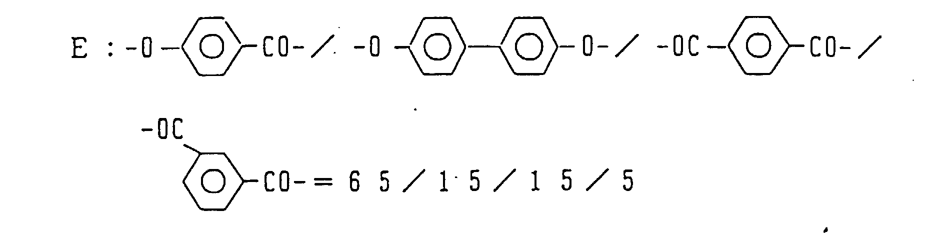

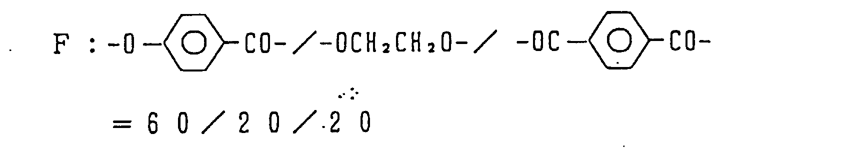

(The above numerals represent molar ratios.)

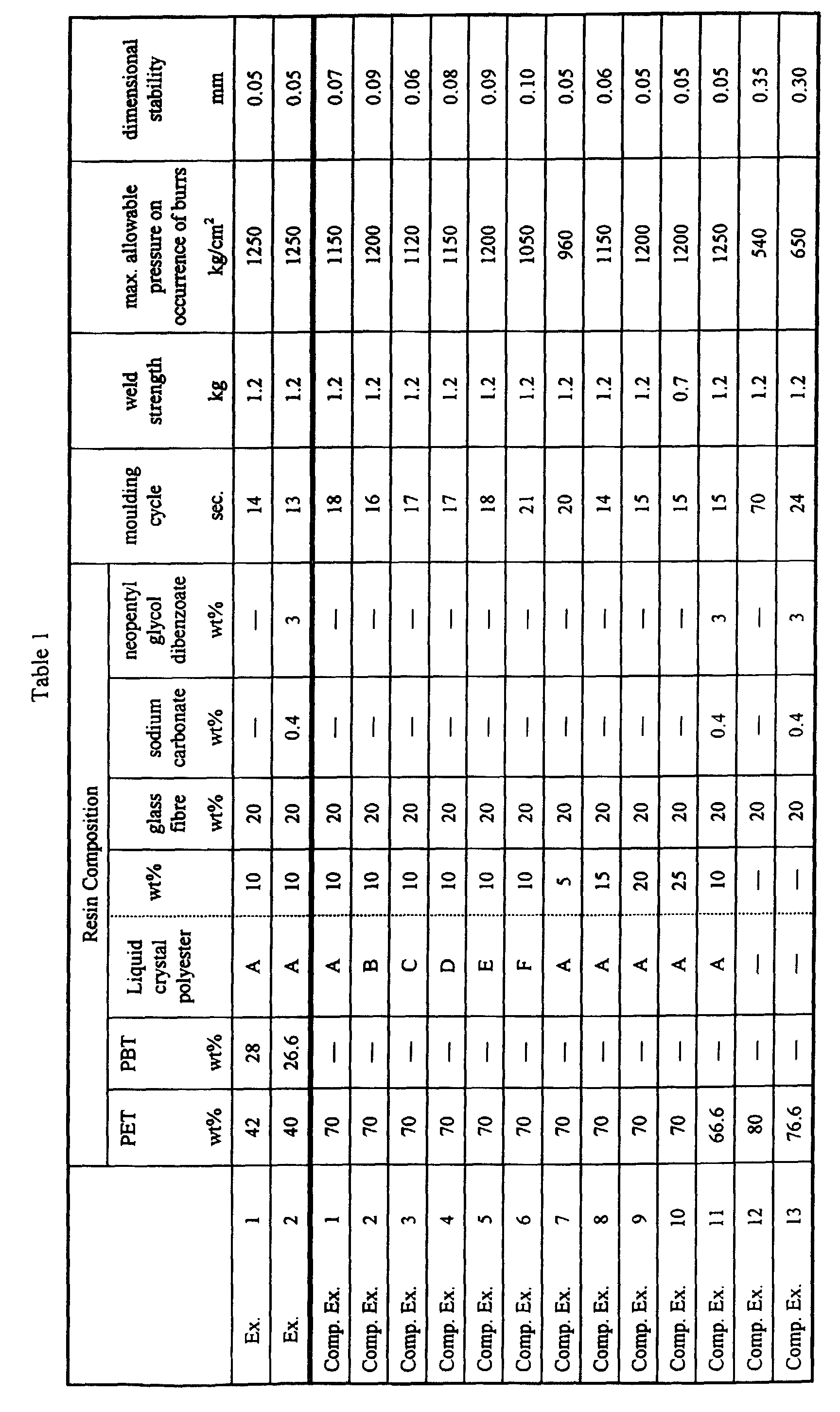

## Claims

1. A polyester resin composition which comprises a polyalkylene terephthalate resin which is a mixture of more than 50% by weight of a polyethylene terephthalate resin with less than 50% by weight of a polybutylene terephthalate resin, and 3 to 20% by weight, based on the weight of said mixture, of a melt-processable polyester capable of forming the anisotropic phase in the molten state, wherein said melt-processable polyester is an aromatic polyester or an aromatic polyester -amide comprising at least one compound selected from the group consisting of
a) aromatic hydroxycarboxylic acids; and
b) aromatic hydroxyamines and aromatic diamines.

2. A polyester resin composition according to claim 1, wherein a filler is further blended in an amount of 1 to 70% by weight based on the total weight of said composition.

3. A polyester resin composition according to either of the preceding claims, in which the amount of the melt processable polyester is 8 to 20 per cent by weight based on the weight of said mixture.

## Patentansprüche

1. Polyesterharz-Zusammensetzung, umfassend ein Polyalkylenterephthalatharz, das eine Mischung von mehr als 50 Gew.-% eines Polyethylenterephthalatharzes mit weniger als 50 Gew.-% eines Polybutylenterephthalatharzes ist, und 3 bis 20 Gew.-%, bezogen auf das Gewicht der Mischung, eines aus der Schmelze verarbeitbaren Polyesters, der dazu fähig ist, im geschmolzenen Zustand die anisotrope Phase zu bilden, wobei der aus der Schmelze verarbeitbare Polyester ein aromatischer Polyester oder ein aromatisches Polyesteramid ist, das wenigstens eine Verbindung umfaßt, die aus der Gruppe bestehend aus
a) aromatischen Hydroxycarbonsäuren und
b) aromatischen Hydroxyaminen und aromatischen Diaminen ausgewählt ist.

2. Polyesterharz-Zusammensetzung nach Anspruch 1, wobei weiterhin ein Füllstoff in einer Menge von 1 bis 70 Gew.-%, bezogen auf das Gesamtgewicht der Zusammensetzung, zugemischt wird.

3. Polyesterharz-Zusammensetzung nach einem der vorhergehenden Ansprüche, wobei die Menge des aus der Schmelze verarbeitbaren Polyesters 8 bis 20 Gew.-%, bezogen auf das Gewicht der Mischung, beträgt.

## Revendications

1. Une composition de résine polyester qui comprend une résine de poly(téréphtalate d'alkylène) qui est un mélange de plus de 50 % en poids d'une résine de poly(téréphtalate d'éthylène) avec moins de 50 % en poids d'une résine de poly(téréphtalate de butylène), et 3 à 20 % en poids, par rapport au poids dudit mélange, d'un polyester façonnable à l'état fondu capable de former une phase anisotrope à l'état fondu, dans laquelle ledit polyester façonnable à l'état fondu est un polyester aromatique ou un polyester-amide aromatique comprenant au moins un composé choisi dans le groupe constitué de :
a) les acides hydroxycarboxyliques aromatiques ; et
b) les hydroxylamines aromatiques et les diamines aromatiques.

2. Une composition de résine polyester selon la revendication 1, dans laquelle est mélangée, en outre, une charge à raison de 1 à 70 % en poids par rapport au poids total de ladite composition.

3. Une composition de résine polyester selon l'une ou l'autre des revendications précédentes, dans laquelle la quantité du polyester façonnable à l'état fondu est de 8 à 20 % en poids par rapport au poids dudit mélange.
